Europäisches Patentamt

European Patent Office

Office européen des brevets

(19)

(11) Publication number: **0 073 119**
**A1**

## (12) EUROPEAN PATENT APPLICATION

(21) Application number: 82304187.6

(22) Date of filing: 09.08.82

(51) Int. Cl.³: **B 61 F 5/30**
**B 60 G 11/54, F 16 F 1/38**

(30) Priority: 13.08.81 GB 8124735

(43) Date of publication of application:
02.03.83 Bulletin 83/9

(84) Designated Contracting States:
DE FR IT SE

(71) Applicant: SILENTBLOC LIMITED
Manor Royal
Crawley West Sussex RH10 2QG(GB)

(72) Inventor: Beachamp, Miles Albert
72 Burlands Langley Green
Crawley Sussex(GB)

(74) Representative: Roos, Michael John et al,
KILBURN & STRODE 30 John Street
London WC1N 2DD(GB)

(54) Wheelset to frame elastomeric spring units, annular elastomeric elements for use in such units and railway vehicle suspension arrangements incorporating such units.

(57) A wheelset to frame elastomeric spring unit (8) comprising a rigid core element or pin (11), a rigid sleeve element or pot (12) surrounding and spaced from the pin (11), and an annular rubber element (10) radially compressed and axially elongated between the rigid elements, such that relative axial movement of the rigid elements causes rolling of the rubber element (10) between the rigid elements (11,12). The rubber element (10) is so constructed or arranged that the unit provides different stiffnesses in mutually perpendicular radial directions. The unit is useful as a component of a wheelset arrangement of a railway vehicle or bogie to provide different degrees of restraint against relative horizontal movement between a wheelset member and a frame member in the direction of travel and in the transverse direction.

FIG. I.

EP 0 073 119 A1

Croydon Printing Company Ltd.

## WHEELSET TO FRAME ELASTOMERIC SPRING UNITS, ANNULAR ELASTOMERIC ELEMENTS FOR USE IN SUCH UNITS AND RAILWAY VEHICLE SUSPENSION ARRANGEMENTS INCORPORATING SUCH UNITS.

This invention relates to elastomeric spring units for use as components of wheelset to frame suspension arrangements of railway vehicles or bogies and to annular elastomeric units for use in such units. The invention also relates to wheelset to frame suspension arrangements incorporating such units.

In particular, the present invention relates to a wheelset to frame elastomeric spring unit comprising a rigid core element, a rigid sleeve element surrounding and spaced from the core element, and an annular elastomeric element radially compressed between the rigid elements.

British Patent Specification No. 1,508,632 (British Railways Board) describes a suspension arrangement between a wheelset and frame of a railway vehicle or bogie, which arrangement has at least one suspension unit comprising a coil spring and a rubber spring unit acting in parallel between a wheelset member and a frame member to provide vertical stiffness therebetween, the rubber spring unit comprising a single annular rubber spring element mounted on a vertical pin secured to one of said members and cramped between the surface of said pin and another vertical surface carried by the other of said members and surrounding the rubber spring element, so that said rubber ring element forms an elongated sleeve on said pin, relative vertical movement between said members causing rolling of the rubber spring element along said surfaces, the rubber spring element providing radial stiffness to restrain relative movements between said members in a horizontal plane (i.e. laterally and longitudinally of the vehicle or bogie). The radial stiffness to restrain relative movements between the wheelset and frame members in a horizontal plane is the same in all radial directions. Whilst it is desirable for the stiffness to be high in order to prevent hunting of the unit it is also desirable for the stiffness to be low for reduced rail wear. Accordingly, this prior unit compromises the stiffness required to reduce hunting with the stiffness required to reduce rail wear.

It is an object of the present invention to overcome at least some of the above disadvantages.

According to the present invention, a wheelset to frame elastomeric spring unit is characterised in that relative axial movement of the rigid elements causes rolling of the elastomeric element between the rigid elements, the unit being arranged to provide different stiffnesses in different mutually perpendicular radial directions.

A unit according to the present invention incorporated in a railway vehicle or bogie may provide a high stiffness in a direction transverse to rails over which the vehicle or bogie is travelling, to reduce hunting and/or to improve the steering characteristics of a bogie, and a relatively low stiffness in the direction of the rails to allow a greater freedom of longitudinal movement to reduce rail wear.

Thus, the invention enables the designer of, for example, a railway vehicle suspension arrangement, to incorporate an elastomeric spring unit, with its well known advantages of simplicity, cheapness and minimal maintenance, in circumstances where it would be necessary or desirable to provide different degrees of resilient restraint against relative movements in the longitudinal and lateral directions.

The different stiffnesses in different radial directions can be obtained in various ways, for example:

    i.      The annular elastomeric element may comprise segmental portions of different elasticity.

    ii.     The annular elastomeric element may comprise segmental portions which are of different cross-section, at least when the element is in an unstressed condition.

    iii.   At least one of the rigid elements is shaped so that the width of the space between them is different in different radial directions.

    iv.    A combination of any two, or all, of i, ii and iii.

The annular elastomeric element, or at least one segmental portion thereof, may be hollow, having an annular bore therein. In such a case, the different cross-sections of different segmental portions referred at ii above may be achieved wholly or in part by having different bore sizes or shapes in different segmental portions. Where the annular elastomeric element comprises separate segmental portions the annular bore may accommodate a flexible split ring, to hold the segmental portions together as an aid to assembly and to ensure that in use the segmental portions do not become axially displaced.

The present invention also includes an annular elastomeric element for use in a wheelset to frame elastomeric spring unit according to the present invention.

According to another aspect of the invention, a wheelset to frame suspension arrangement of a railway vehicle or bogie has at least one suspension unit comprising a main spring and an elastomeric spring unit according to the first aspect of the invention acting in parallel between a wheelset member and a frame member, the rigid core element being secured vertically to one of the said members and the rigid sleeve element being secured vertically to the other of the said members, the elastomeric spring unit providing radial stiffness to restrain relative movements between the said members in a horizontal plane, which stiffness is different in the direction of travel from the stiffness perpendicular to the direction of travel.

The terms "vertically" and "horizontal" do not exclude such departures from the strict vertical or horizontal as occur in normal railway operation.

Some embodiments of the invention will now be described by way of example with reference to the accompanying drawings, in which:

Figure 1 is an elevation, partly in section, of part of a railway vehicle bogie wheelset to frame suspension arrangement incorporating an elastomeric spring unit embodying the invention;

Figure 2 is a plan view of one form of elastomeric element;

Figure 3 is a side view of the element shown in Figure 2;

Figure 4 is a plan view of a second form of elastomeric element;

Figure 5 is a side view of the element shown in Figure 4, with the right half in section taken on line V-V;

Figure 6 is a plan view of a third form of elastomeric element;

Figure 7 is a side view of the element shown in Figure 6, with the right half in section taken on line VII-VII;

Figure 8 is a plan view of a fourth form of elastomeric element;

Figure 9 is a side view of the element shown in Figure 8, with the right half in section taken on line IX-IX;

Figure 10 is a plan view of a fifth form of elastomeric element;

Figure 11 is a side view of the element shown in Figure 10, with the right half in section taken on line XI-XI;

Figure 12 is a plan view of a sixth form of elastomeric element;

Figure 13 is a side view of the element shown in Figure 12, with the right half in section taken on line XIII-XIII;

Figure 14 is a plan view of a seventh form of elastomeric element; and

Figure 15 is a side view of the element shown in Figure 14, with the right half in section taken on line XV-XV.

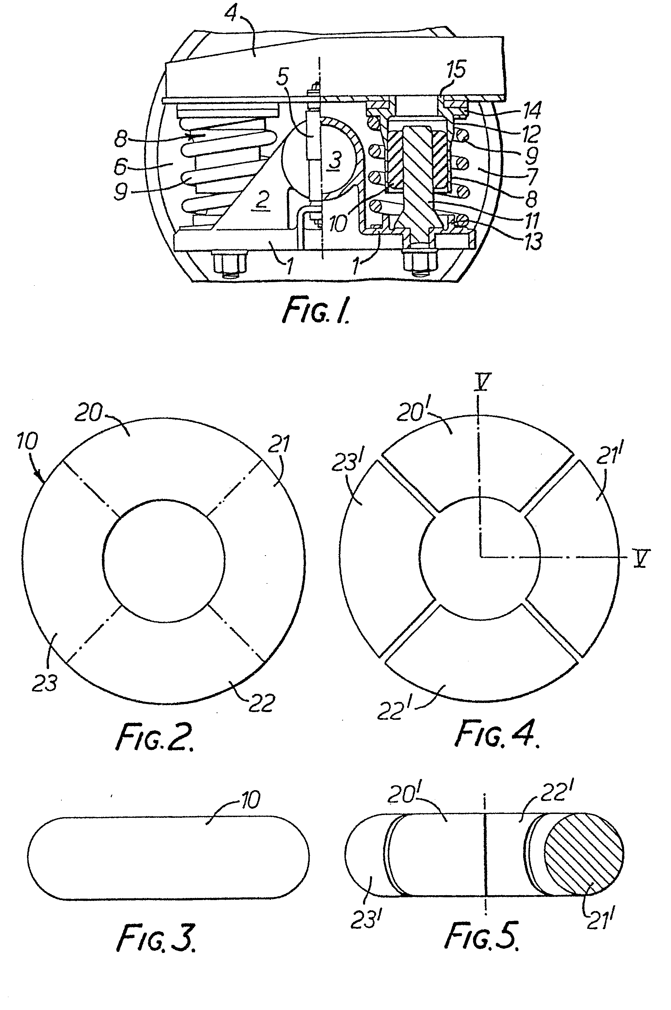

Referring to Figure 1, the suspension arrangement is supported on one of the axle boxes (not shown) of the wheelset by a plate member 1. The plate member 1 has upstanding side walls 2, circular holes 3 being provided in the side walls 2 so that the plate member can be located over the axle box.  A portion 4
of the bogie frame is shown supported on the suspension
unit.  A conventional damper 5 is connected between the
plate member 1 and the bogie frame 4 for damping
relative vertical movements.

The suspension unit has two identical spring
assemblies 6 and 7 mounted in front of and behind the
axle box.  Each spring assembly comprises an elastomeric
spring unit 8 and a main coil spring 9 acting in parallel
between the axle box and the bogie frame.  The elastomeric
spring unit 8 comprises an annular elastomeric element
10 which surrounds a rigid core element 11 and is
surrounded by a rigid sleeve element 12, being radially
compressed between these rigid elements.  The core
element 11 is secured to and projects vertically upwards
from the plate member 1, while the sleeve element 12
is secured to and projects vertically downwards from
the bogie frame 4.  The coil spring 9 locates around
the sleeve element 12 and abuts against the plate member
1 at its lower end, the member 1 having an upstanding
boss 13 for locating the lower end of the coil spring 9.
At its upper end the coil spring 9 abuts against the
bogie frame 4 through an external flange 14 on the
sleeve element 12 and thus clamps the sleeve element
12 to the bogie frame 4.  Location of the sleeve
element 12 against displacement in any  radial
direction is afforded by a cylindrical extension 15
on the sleeve element 12 located in a hole in the
bogie frame 4.  The outside of the sleeve element 12
serves as a guide for the vertical deflections of the coil spring 9.

The suspension unit is illustrated in Figure 1 in its condition for vehicle tare load. In this condition the annular elastomeric element 10 is prestressed to a predetermined degree by deformation brought about when fitting it on the rigid core element 11 and within the rigid sleeve element 12. The deformation is such that the annular elastomeric element 10 frictionally grips the surface of the rigid core element 11 and the inner surface of the rigid sleeve element 12 so that it cannot slip along these surfaces. Thus relative vertical movement between the rigid core and sleeve elements will cause the annular elastomeric element 10 to roll along the surfaces of the said rigid elements. Also, the degree of deformation produces the desired vertical shear characteristics.

In operation of the suspension arrangement described above, the vertical load is mainly supported by the coil spring 9 which is designed to give the desired degree of vertical freedom between the bogie frame and the wheelset. The shear stiffness of the annular elastomeric element 10 will contribute to the vertical suspension stiffness, but the proportion will be small. Vertical deflections are damped mainly by the damper 5, but the elastomeric spring unit 8 may make a small contribution to vertical damping.

As so far described, this embodiment may appear substantially the same as the first embodiment illustrated and described in the said British Patent Specification No. 1,508,632. The essential difference resides in the nature of the annular elastomeric element 10. In the said patent specification it is pointed out that the longitudinal and lateral forces are reacted through the rubber spring unit which maintains a radial stiffness whilst accommodating both static and dynamic vertical deflections. It is further pointed out that whilst the optimum value of the radial stiffness will be different for different vehicles, the same rubber element can be used on different vehicles to achieve a near optimum radial stiffness. The present invention is based on an appreciation that it is possible, with an elastomeric spring unit, also to achieve different stiffnesses in different radial directions. The following description discloses several ways in which this can be done, by using different forms of annular elastomeric element.

The elastomeric element 10 shown in Figures 2 and 3, when in its unstressed condition as illustrated, before it has been forced onto the rigid core element 11 and squeezed into the rigid sleeve element 12, is in the form of a torus or 'O' ring, the same shape as the single rubber ring described in the said patent specification. However, in this case the ring is not homogeneous but comprises four segmental portions 20, 21, 22 and 23. The portions 20 and 22 are made of a material having a different elasticity from the material of the portions 21 and 23. Thus, the portions 20 and 22 are made of a soft rubber whereas the portions 21 and 23 are made of a harder rubber. The elastomeric spring unit would be installed with the softer segments 20 and 22 aligned in the longitudinal direction, i.e. the direction of travel. The shear resistance of the hard rubber segments 21 and 23 which would tend to resist movement in the longitudinal direction is more than counteracted by the lower stiffness in compression of the soft rubber segments 20 and 22. Separate segments can be joined together end to end to make an integral unit, or the element can be formed as an integral unit, the requisite differences in hardness being imparted by differences in treatment in the course of vulcanisation. Although the segments are all shown as being the same size, they could be of different lengths in order to vary the stiffness characteristics of the unit.

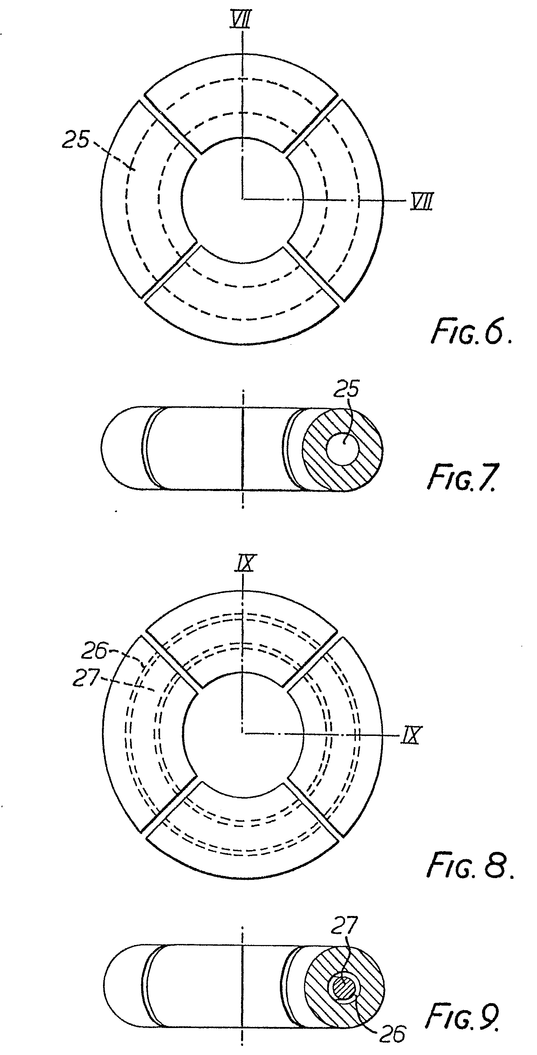

In some cases, particularly where only small axial movements are contemplated, the segments 20'. 21', 22' and 23' may be formed as separate integers as shown in Figures 4 and 5, and remain so in the spring unit.

The annular elastomeric element need not be a solid body; it could be hollow as shown in Figures 6 and 7 where a segmental annular element has a central bore 25. In this case the different stiffnesses are achieved by using rubbers of different hardness for alternate segments, as in Figures 4 and 5. However, alternatively or in addition, differences in stiffness can be achieved by using bores of different sizes in different segments, or by employing some solid segments and some hollow ones.

Figures 8 and 9 show an embodiment like that of Figures 6 and 7, comprising separate segments with a bore 26, but in this case the segments are threaded onto a flexible split ring 27. The ring keeps the segments in position end-to-end which facilitates assembly of the elastomeric spring unit and reduces the risk of the segments becoming axially displaced in use.

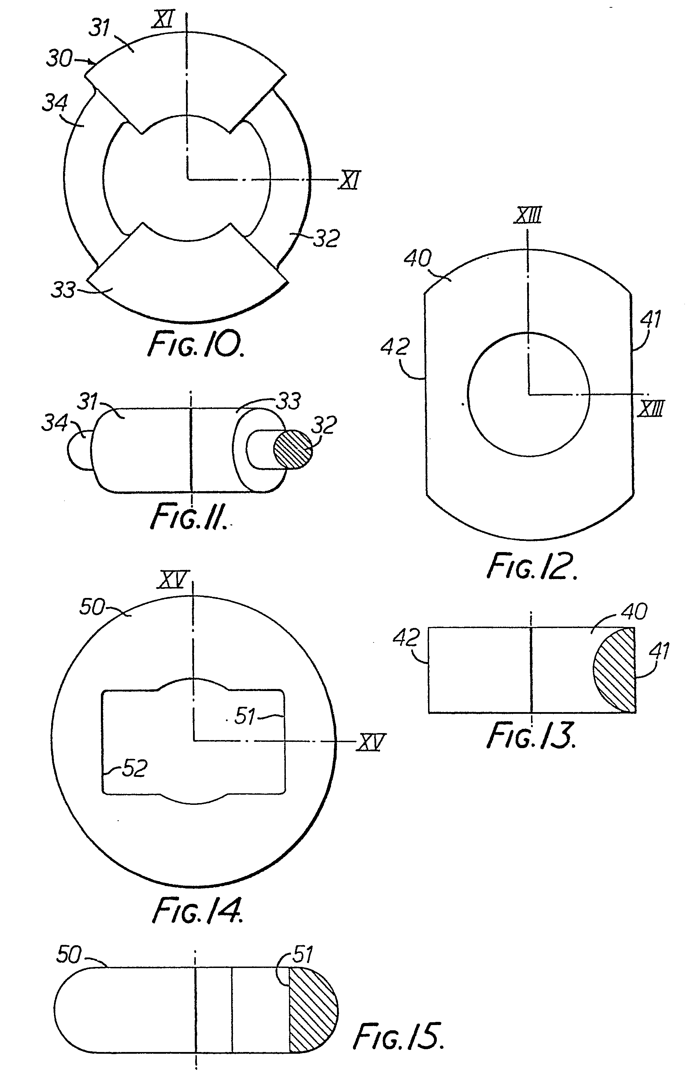

Figures 10 and 11 show an embodiment in which the material of the annular elastomeric element 30 is of uniform hardness, the different stiffnesses in different radial directions being achieved by having segmental portions of different cross-sections. Thus, the segmental portions 31 and 33 are of substantially larger cross-sectional area, and therefore of greater stiffness, than the segmental portions 32 and 34.

Another embodiment which achieves different stiffnesses in different radial directions by variations in cross-section rather than by variations of hardness of the material is shown in Figures 12 and 13. In this case the elastomeric element 40 is essentially a torus in which a pair of outwardly-facing parallel flat surfaces 41 and 42 has been formed externally on diametrically opposite sides.

Figures 14 and 15 show a somewhat similar embodiment, but in this case a pair of parallel flat surfaces 51 and 52 has been formed in the interior of a torus 50.

0073119

CLAIMS

1.       A wheelset to frame elastomeric spring unit comprising a rigid core element, a rigid sleeve element surrounding and spaced from the core element, and an annular elastomeric element radially compressed between the rigid elements characterised in that relative axial movement of the rigid elements (11, 12) causes rolling of the elastomeric element (10; 30; 40; 50) between the rigid elements, the unit being arranged to provide different stiffnesses in mutually perpendicular radial directions.

2.       An elastomeric spring unit as claimed in claim 1 characterised in that at least part of the difference in stiffness is afforded by the annular elastomeric element (10, 30, 40, 50) comprising segmental portions (20, 21, 22, 23; 20', 21', 22', 23'; 31, 32, 33, 34) of different effective elasticity.

3.       An elastomeric spring unit as claimed in claim 2 characterised in that the annular elastomeric element (10) has at least one hollow segmental portion (25; 26).

4.       An elastomeric spring unit as claimed in claim 3 characterised in that the annular elastomeric element consists of hollow segmental portions (26) defining an annular bore which accommodates a flexible split ring (27).

5. An elastomeric spring unit as claimed in any of the preceding claims characterised in that at least part of the difference in stiffness is afforded by the annular elastomeric element (30; 40; 50) comprising segmental portions (31, 32, 33, 34) which are of different cross-section, at least when the annular elastomeric element is in an unstressed condition.

6. An elastomeric spring unit as claimed in claim 3 or claim 4, and also in claim 5, characterised in that the difference in cross-section of different segmental portions is afforded at least in part by a difference in cross-section of bores therein.

7. An elastomeric spring unit as claimed in any of the preceding claims characterised in that at least one of the rigid elements is shaped so that the width of the space between the rigid elements is different in different radial directions.

8. A wheelset to frame suspension arrangement of a railway vehicle or bogie, having at least one suspension unit comprising a main spring and an elastomeric spring as claimed in any of the preceding claims acting in parallel between a wheelset member and a frame member, the rigid core element being secured vertically to one of the said members and the rigid sleeve element being secured vertically to the other of the said members, the elastomeric spring unit providing radial stiffness to restrain relative movements between the said members in a horizontal plane, which stiffness is different in the direction of travel from the stiffness transverse to the direction of travel.

9.      An annular elastomeric element for use in a wheelset to frame elastomeric spring unit as claimed in any preceding claim.

10.     A wheelset to frame suspension arrangement of a railway vehicle or bogie, the arrangement having at least one suspension unit comprising a coil spring and a rubber spring unit acting in parallel between a wheelset member and a frame member to provide a vertical stiffness therebetween, the rubber spring unit comprising an annular rubber spring element mounted on a vertical rigid core element secured to one of said members and radially compressed and axially elongated between the surface of said core element and a vertical rigid sleeve element carried by the other of said members and surrounding the rubber spring element, relative vertical movement between said members causing rolling of the rubber spring element along said surfaces, the rubber spring element providing radial stiffness to restrain relative movements between said members in a horizontal plane, which stiffness is different in the direction of travel from the stiffness perpendicular to the direction of travel.

1/3                                    0073119

FIG. 1.

FIG. 2.

FIG. 3.

FIG. 4.

FIG. 5.

VII

VII

25

*Fig.6.*

25

*Fig.7.*

IX

IX

26
27

*Fig. 8.*

27

*Fig.9.*

26

FIG.10.

FIG.11.

FIG.12.

FIG.14.

FIG.13.

FIG.15.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | CH-A- 270 434 (SCHWEIZERISCHE LOKOMOTIV- UND MASCHINENFABRIK) * Page 1, lines 13-52; page 2, lines 1-92; figures 1,2 * | 1,2,5-7,8-10 | B 61 F 5/30 B 60 G 11/54 F 16 F 1/38 |
| Y | DE-A-2 537 172 (MAN) * Page 1, paragraph 2; page 2, paragraph 3; page 4, paragraph 3 and 5 - page 5, paragraph 1; page 8, paragraph 2; figure 1 * | 1,2,8-10 | |
| A | DE-B-1 038 416 (LEMFÖRDER METALLWAREN) * Column 1, lines 26-48; figures 1-4 * | 1-4 | |
| D,A | GB-A-1 508 632 (BRITISH RAILWAYS BOARD) | | **TECHNICAL FIELDS SEARCHED (Int. Cl. 3)** B 61 F B 60 G F 16 F |

The present search report has been drawn up for all claims

| Place of search THE HAGUE | Date of completion of the search 15-11-1982 | Examiner GROTZINGER J.P. |
|---|---|---|